Europäisches Patentamt

European Patent Office

Office européen des brevets

(19)

(11) **EP 1 050 973 B1**

(12) **FASCICULE DE BREVET EUROPEEN**

(45) Date de publication et mention
de la délivrance du brevet:
**15.12.2004 Bulletin 2004/51**

(51) Int Cl.$^7$: **H04B 1/707**

(21) Numéro de dépôt: **00401210.0**

(22) Date de dépôt: **03.05.2000**

(54) **Procédé de détection conjointe d'un ensemble de codes CDMA**

Verfahren zur gleichzeitige Erfassung von einem CDMA-Kodesatz

Method for joint detection of a CDMA code set

(84) Etats contractants désignés:
**DE GB IT NL SE**

(30) Priorité: **04.05.1999 FR 9905642**

(43) Date de publication de la demande:
**08.11.2000 Bulletin 2000/45**

(73) Titulaire: **FRANCE TELECOM**
**75015 Paris (FR)**

(72) Inventeur: **Pigeonnat, Yvan**
**38330 Saint-Nazaire-les-Eymes (FR)**

(74) Mandataire: **Fréchède, Michel**
**Cabinet Plasseraud**
**84, rue d'Amsterdam**
**75440 Paris Cédex 09 (FR)**

(56) Documents cités:
**EP-A- 0 707 385**

• **PIGEONNAT Y: "Joint detection for UMTS: complexity and alternative solutions" 1999 IEEE 49TH VEHICULAR TECHNOLOGY CONFERENCE (CAT. NO.99CH36363), 1999 IEEE 49TH VEHICULAR TECHNOLOGY CONFERENCE. MOVING INTO A NEW MILLENIUM, HOUSTON, TX, USA, 16-20 MAY 1999, pages 546-550 vol.1, XP002144114 1999, Piscataway, NJ, USA, IEEE, USA ISBN: 0-7803-5565-2**

• **PIGEONNAT Y: "Alternative solutions for joint detection in TD/CDMA multiple access scheme for UMTS" 1999 2ND IEEE WORKSHOP ON SIGNAL PROCESSING ADVANCES IN WIRELESS COMMUNICATIONS (CAT. NO.99EX304), PROCEEDINGS OF 1999 2ND WORKSHOP ON SIGNAL PROCESSING ADVANCES IN WIRELESS, ANNAPOLIS, MD, USA, 9-12 MAY 1999, pages 329-332, XP002144116 1999, Piscataway, NJ, USA, IEEE, USA ISBN: 0-7803-5599-7**

• **MAYER J ET AL: "Realtime feasibility of joint detection CDMA" EPMCC '97. SECOND EUROPEAN PERSONAL MOBILE COMMUNICATIONS CONFERENCE TOGETHER WITH 3. ITG-FACHTAGUNG, MOBILE KOMMUNIKATION, BONN, GERMANY, 30 SEPT.-2 OCT. 1997, no. 145, pages 245-252, XP002112135 ITG-Fachberichte, 1997, VDE-Verlag, Germany ISSN: 0341-0196**

• **KARIMI H R ET AL: "A novel and efficient solution to block-based joint-detection using approximate Cholesky factorization" NINTH IEEE INTERNATIONAL SYMPOSIUM ON PERSONAL, INDOOR AND MOBILE RADIO COMMUNICATIONS (CAT. NO.98TH8361), PROCEEDINGS OF NINTH INTERNATIONAL SYMPOSIUM ON PERSONAL, INDOOR, AND MOBILE RADIO COMMUNICATIONS (PIMRC'98), BOSTON, MA, USA, 8-11 SEPT. 1998, pages 1340-1345 vol.3, XP002112134 1998, New York, NY, USA, IEEE, USA ISBN: 0-7803-4872-9**

**Description**

L'invention concerne un procédé de détection conjointe d'un ensemble de codes CDMA, utilisés en téléphonie mobile.

L'UMTS, pour *Universal Mobile Telecommunications System,* désigne la nouvelle norme de téléphonie mobile destinée à remplacer la norme GSM. Les premières applications commerciales de cette nouvelle norme devraient voir le jour entre 2000 et 2005.

Vis-à-vis de la norme GSM précitée, les principales améliorations sont les suivantes : alors que dans le système GSM chaque station de base ne peut dialoguer qu'avec huit mobiles avec un débit maximum de 13 kbits/s pour chacun de ces mobiles, le système UMTS a pour objet, d'une part, d'augmenter le nombre d'utilisateurs, et, d'autre part, de pouvoir allouer à chacun de ces mobiles des ressources permettant de transmettre des informations à des débits compris entre 4 kbits/s et 2 Mbits/s, en fonction de la nature de l'information transmise telle que parole, données, vidéo-téléphonie, hi-fi audio ou vidéo.

Dans ce but, deux solutions ont été retenues au niveau du continent européen en ce qui concerne la technique d'accès radio multi-utilisateurs : la technique dite Wideband-CDMA en mode FDD, pour *Frequency Division Duplex,* duplex à division de fréquence, et la technique dite TDMA/CDMA avec détection conjointe en mode TDD pour *Time Division Duplex,* duplex à division temporelle.

Un inconvénient majeur de la technique TDMA/CDMA en mode TDD est la grande complexité de la détection conjointe des codes CDMA, la détection conjointe étant définie comme le fait de procéder simultanément à la détection de tous les codes CDMA simultanément actifs et reçus sur plusieurs antennes, contrairement au filtre en râteau (*rake receiver* en langage anglo-saxon) utilisé habituellement en CDMA qui permet de détecter un code à la fois, les autres codes étant considérés comme du signal brouilleur.

Le document "Faisabilité en temps réel de la détection conjointe CDMA" ("Realtime Feasibility of Joint Detection CDMA" en langage anglo-saxon publié chez Research Group for RF Communications, University of Kaiserslautern, 1997, p. 245-252) décrit un algorithme de détection conjointe où le processus d'estimation de l'ensemble des symboles des codes CDMA a lieu au moyen de la résolution d'un système linéaire d'équations auquel on applique une décomposition Cholesky.

La présente invention a pour objet de remédier aux inconvénients précités par la mise en oeuvre d'un procédé de détection conjointe de codes CDMA simplifié.

En particulier, un objet de la présente invention est la mise en oeuvre d'un procédé de détection conjointe de codes CDMA dans lequel un processus successif est mis en oeuvre, chaque appel successif permettant la mise en oeuvre d'une détection conjointe simplifiée d'un symbole pour chaque code CDMA simultanément actif, l'appel successif permettant la détection de l'ensemble des symboles de tous les codes CDMA simultanément actifs, selon une détection conjointe.

Le procédé de détection conjointe d'un ensemble de K codes CDMA simultanément actifs reçus sur les Ka antennes d'un émetteur récepteur mobile, conforme à l'objet de la présente invention, s'applique à des codes transmis par l'intermédiaire d'un canal de transmission linéaire multi-trajets avec bruit additif blanc gaussien vérifiant la relation e = A.d+n où A désigne la matrice de transfert de ce canal linéaire stationnaire multitrajet, d désigne l'ensemble des symboles avant étalement des différents codes à transmettre, n un vecteur de bruit additionnel et e l'ensemble des échantillons reçus. Une estimation δ de l'ensemble des symboles des codes est effectuée par une opération de pseudo inversion de la matrice de transfert de la forme $\delta = (A^+.A)^{-1}.A^+.e$ où le symbole + désigne l'opérateur de transposition et conjugaison complexe. Le procédé objet de l'invention est remarquable en ce qu'il consiste, pour une sous-matrice de transfert $A_s$ correspondant à un nombre S de lignes de blocs de la matrice de transfert A, à déterminer un ensemble de filtres égaliseurs permettant d'estimer successivement tous les symboles émis par les différents codes CDMA à partir d'un nombre déterminé d'échantillons reçus $e_S$.

Il sera mieux compris à la lecture de la description et à l'observation des dessins ci-après, dans lesquels, outre les figures 1a à 1d relatives à l'art antérieur :

- les figures 2a et 2b représentent un diagramme illustratif du procédé de détection conjointe d'un ensemble de codes CDMA objet de la présente invention ;
- la figure 3 représente, à titre illustratif, un organigramme de mise en oeuvre préférentiel du procédé de détection conjointe d'un ensemble de codes CDMA conforme à l'objet de la présente invention.

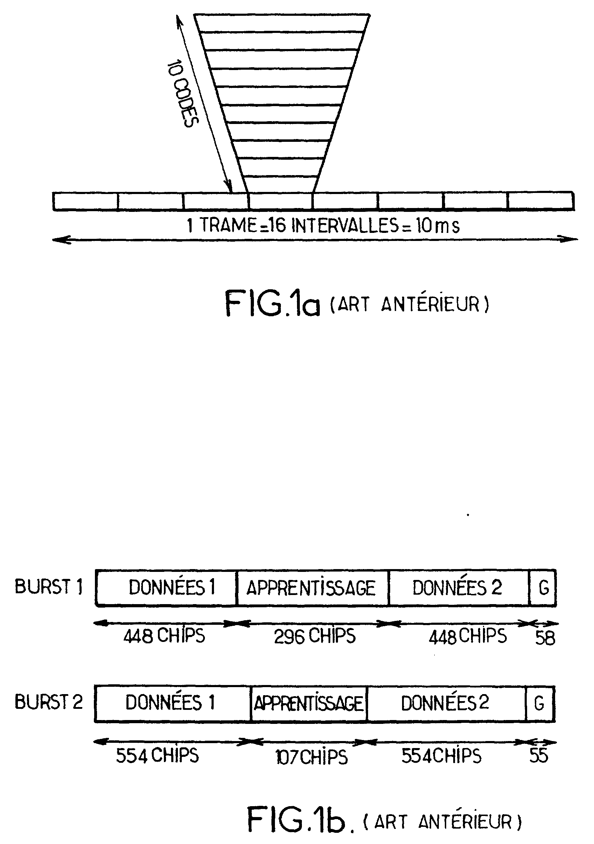

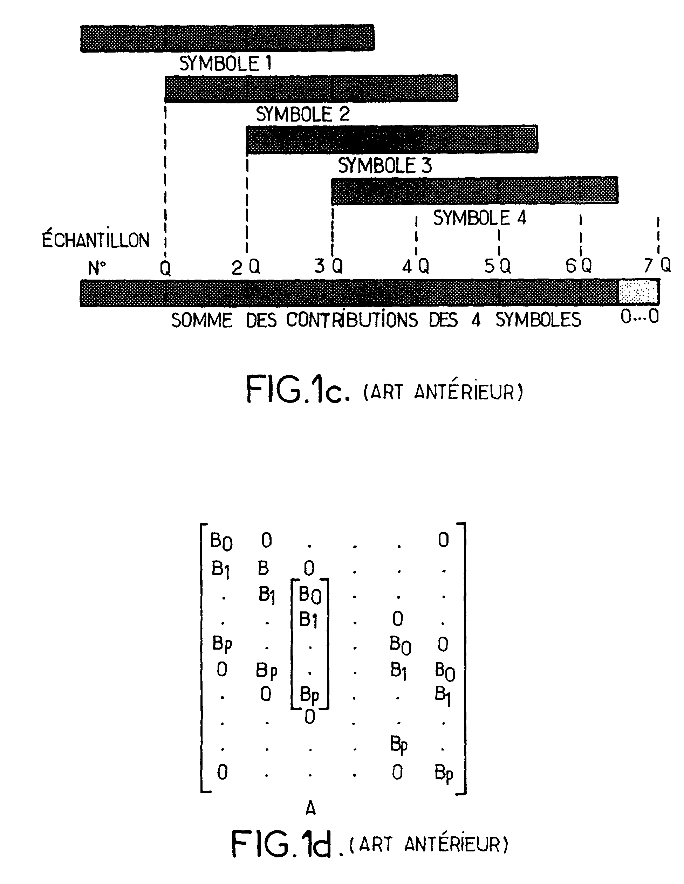

Préalablement à la description proprement dite du procédé de détection conjointe d'un ensemble de codes CDMA conforme à l'objet de la présente invention, différents éléments techniques de rappel du processus de transmission de trames TDMA et de détection conjointe de ces trames seront donnés dans la description en liaison avec les figures 1a, 1b, 1c et 1d.

En référence à la figure 1a, on rappelle qu'une trame TDMA présente une durée de 10 ms et est décomposée en seize intervalles temporels, encore désignés par *time slots* en langage anglo-saxon. Dans chacun de ces intervalles temporels, il est possible de transmettre jusqu'à dix salves de données, ou *bursts*, grâce à une séparation par des codes CDMA orthogonaux. L'introduction des codes CDMA apporte un étalement d'un facteur 16.

Un intervalle temporel représente 1250 temps-*chip*, la notion de *chip* en langage anglo-saxon désignant un processus de sur-échantillonnage qui permet après multiplication par un train binaire de réaliser un étalement de spectre.

Ainsi que représenté en figure 1b, le processus précité autorise deux constructions de salves suivantes, notées Burst1 et Burst2. Chaque construction comprend une séquence d'apprentissage pour estimer le canal, un temps de garde noté G en fin de salve, et deux blocs de données qui représentent respectivement 2x28 et 2x34 symboles.

On suppose que K codes CDMA sont simultanément actifs. Chaque code CDMA permet la transmission de 2xN symboles de données dans une salve, confer figure 1b. Chaque symbole de données de durée $T_s$ est étalé par le code CDMA de longueur Q, encore désignée par facteur d'étalement.

Ainsi, pour un symbole de données, Q chips de durée $T_c = T_s/Q$ sont envoyées par le canal radiofréquence.

Le récepteur mobile est considéré équipé de Ka antennes, le nombre d'antennes étant au moins égal à 2.

Ainsi, les chips transmis sont reçus au travers de Ka canaux radiofréquence, lesquels peuvent être caractérisés par le vecteur colonne de leur réponse impulsionnelle noté $h^{(ka)}$ (ka=1 ...Ka), cette réponse impulsionnelle étant échantillonnée au temps chip décrit précédemment dans la description.

Le tableau 1 ci-après résume les différents paramètres qui influent sur la complexité de la détection conjointe.

TABLEAU 1

| NOM | LIBELLE | VALEUR |
|-----|---------|--------|
| K | Nb de codes utilisés dans l'intervalle temporel considéré | 1 à 10 |
| N | Nb de symboles utiles dans ½ burst | 28 ou 34 |
| Q | Facteur d'étalement | 16 |
| Ka | Nb d'antennes | 2(mobile) et + (station de base) |
| W | Longueur du canal en temps-chip | 1 à 120 |
| P | Longueur du canal en temps-symbole | 1 à 8 |
| S | Nb d'intervalles par trame concernant l'utilisateur considéré | 1 à 8 |
| $T_c$ | Temps-chip | 0,462 µs |
| $T_s$ | Temps-symbole (=16 $T_c$) | 7,38 µs |
| TS | Temps-slot (intervalle) (=1250 $T_c$) | 577 µs |
| TT | Temps-trame (=16 TS) | 10 ms |

On désigne par W la longueur de ces vecteurs colonne précités, la longueur de ces derniers étant encore désignée par longueur du canal en temps-chip.

On désigne par d le vecteur colonne temporellement ordonné des NxK symboles de données à transmettre dans une demie salve. Ainsi, le vecteur colonne d est obtenu en classant les données avant l'étalement en mettant en tête les premiers symboles de chaque code, puis les deuxièmes de chaque code et enfin les Nièmes de chaque code. Les K premiers symboles du vecteur colonne d sont les premiers de chacun des K codes, ensuite les deuxièmes, etc.

On désigne par e le vecteur colonne des échantillons reçus sur toutes les Ka antennes en ordonnant en tête les premiers échantillons sur les Ka antennes, puis les deuxièmes échantillons, etc.

Après passage dans le canal global de transmission, c'est-à-dire séquence d'étalement + canal radiofréquence, chaque symbole de données émis contribue à la réception de Q+W-1 échantillons sur chaque antenne. Pour le kième code CDMA, avec 1 < k < K, le transmission d'un symbole de données à travers le canal global précité conduit à la réception de Q+W-1 échantillons sur chaque antenne considérée. De cette manière, le canal global peut être considéré comme un canal à Q+W-1 trajets dont la réponse impulsionnelle est le vecteur colonne vérifiant la relation :

$$b^{(ka,k)} = h^{(ka)} * c^{(k)}$$

Dans la relation précédente, $c^{(k)}$ désigne la séquence correspondant au kième code CDMA transmis.

Chaque symbole étant émis sur une durée de Q temps-chip, on obtient ainsi NxQ+W-1 échantillons sur chaque antenne équipant le récepteur.

La somme des contributions de quatre symboles successifs notés Symbole1, Symbole2, Symbole3 et Symbole4, pour N=4 symboles, W-1=2 et P=3 est représentée en figure 1c.

En référence au formalisme introduit précédemment, il est alors possible d'écrire l'équation matricielle ci-après :

$$e = A.d + n$$

Dans cette relation, A désigne une matrice de transfert du canal linéaire stationnaire multitrajet précédemment mentionné relatif au canal global, et n un vecteur colonne de bruit additif blanc Gaussien.

Dans le but de faire apparaître des propriétés de symétrie de la matrice A précitée, le nombre total d'échantillons reçus doit être un multiple de Q facteur d'étalement.Pour ce faire, des échantillons nuls peuvent être ajoutés, ce qui conduit à l'ajout de coefficients nuls à la fin des $b^{(ka,k)}$. Pour P désignant la partie entière de (W-1)/Q, P représentant la longueur du canal en temps-symbole, grâce à l'introduction des échantillons nuls et des coefficients nuls de la matrice A considérée, (N+P).Q échantillons sont reçus sur chaque antenne.

La matrice A de taille [(N+P).Ka.QxN.K]est représentée en figure 1d et est constituée par des sous-matrices $B_i$ de dimension [Ka.QxK] construite de la manière ci-après :

- chacune des K colonnes de chaque sous-matrice $B_0$ à $B_p$ représentée en figure 1d correspond aux $K_a$ canaux globaux, codage + canal radiofréquence, entrelacés. La notion d'entrelacement correspond à l'ordonnancement des premiers coefficients pour chaque antenne, puis des deuxièmes, puis des troisièmes, etc. vers les Ka antennes. En effet, chaque symbole émis apporte une contribution à Q+W-1 échantillons sur chaque antenne, soit au total Ka. (Q+W-1) échantillons. Ce qui, en prenant en compte quelques contributions nulles, donne Ka.Q. (P+1).

Ainsi, la kième colonne de chaque sous-matrice colonne relative à chaque code compris entre 1 et N est donnée par la relation :

$$\left( \underleftrightarrow{b_1^{(1,k)} \ldots b_1^{(Ka,k)}} \; \underleftrightarrow{b_2^{(1,k)} \ldots b_2^{(Ka,k)}} \; \underleftrightarrow{\ldots b_{Q+W-1}^{(1,k)}} \; \underleftrightarrow{\ldots b_{Q+W-1}^{(Ka,k)}} \; \underleftrightarrow{0 \ldots 0} \right)^T$$

Dans cette relation $b_1^{(1,k)} \ldots b_1^{(Ka,k)}$ à $b_{Q+W-1}^{(1,k)} \ldots b_{Q+W-1}^{(Ka,k)}$ soulignés par une double flèche désignent la contribution des premiers, deuxièmes et derniers éléments de rang Q+W-1 à la réponse impulsionnelle du canal global multitrajets.

La matrice de transfert A est connue après la phase d'estimation des canaux, laquelle est effectuée à l'aide des séquences d'apprentissage. La matrice de transfert A peut être construite en calculant le produit de convolution de l'estimation de la réponse impulsionnelle du canal par les codes CDMA. L'objet de la détection conjointe est de calculer δ une estimation de d, vecteur colonne temporellement ordonné des N.K symboles de données à transmettre dans une demi-salve, à partir de e vecteur colonne des échantillons reçus sur l'ensemble des Ka antennes, et bien entendu de la matrice de transfert A.

Un processus classique de détection conjointe désigné par *Zero-Forcing Block Linear Equalizer* pour ZF-BLE, propose d'effectuer le calcul de l'estimation δ à partir de la relation :

$$\delta = (A^{+}.A)^{-1}.A^{+}.e$$

Dans cette relation, le symbole + en exposant représente l'opérateur de trans-conjugaison, l'exposant -1 désignant l'opérateur d'inversion.

En fait, l'estimation précitée consiste à effectuer une pseudo-inversion de la matrice de transfert A.

Le processus d'estimation peut alors être décomposé en deux phases :

■ Phase de désétalement permettant de se ramener aux petites tailles des vecteurs et matrices mis en jeu par le calcul de $A^{+}.A$ et de $y = A^{+}.e$.

■ Phase de résolution du système linéaire $y = A^{+}.A.\delta$. La matrice $A^{+}.A$ étant hermitienne définie positive, la résolution précitée peut être effectuée à l'aide d'une décomposition de Cholesky suivie de la résolution de deux systèmes triangulaires.

La méthode précédemment décrite implique une complexité de détection conjointe critique dans la voie descendante. Le tableau ci-après présente les résultats d'une étude de complexité dans les cas difficiles d'un réseau chargé et d'un canal long pour les différents services prévus pour l'UMTS :

TABLEAU 2

| SERVICE | PAROLE | 384 kb/s | 2 Mb/s |
|---|---|---|---|
| Longueur canal en temps-symbole | 7 | 7 | 3 |
| Nombre d'intervalles à décoder/trame | 1 | 2 | 8 |
| % de complexité pour le désétalement | 29 % | 29 % | 34 % |
| % de complexité pour le système linéaire | 71 % | 71 % | 66 % |
| Complexité totale en MOPS | 175 | 350 | 570 |

La complexité totale en millions d'opérations, opérations définies par une multiplication-accumulation complexe, par seconde, se situe à la limite des possibilités des processeurs de signaux numériques actuels.

Le procédé, objet de la présente invention, a pour but de réduire cette complexité.

Le procédé de détection conjointe d'un ensemble de codes CDMA, objet de la présente invention, est basé sur l'observation selon laquelle environ 70 % de la complexité totale de la détection conjointe provient de la résolution du système linéaire. En effet, l'essentiel de la complexité de la détection conjointe provient de la taille des matrices manipulées, taille résultant elle-même du processus de traitement par blocs. Dans l'exemple précédemment donné, la matrice de transfert A est de taille 2432 x 690.

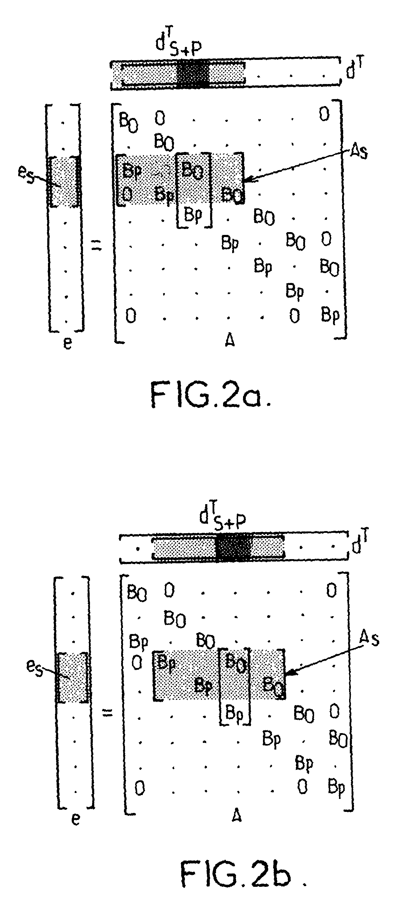

En conséquence et en référence aux figures 2a et 2b, le procédé de détection conjointe d'un ensemble de K codes CDMA simultanément actifs reçus sur les Ka antennes d'un émetteur/récepteur mobile, conforme à l'objet de la présente invention, consiste à considérer la transmission de ces codes par l'intermédiaire d'un canal de transmission linéaire stationnaire multi-trajets avec bruit additionnel blanc Gaussien vérifiant la relation e = A.d+n précédemment mentionnée dans la description, dans laquelle A désigne la matrice de transfert de ce canal linéaire stationnaire multi-trajets où d désigne l'ensemble des symboles des différents codes à transmettre et n le vecteur de bruit additionnel, e désignant l'ensemble des échantillons reçus.

Afin d'effectuer une estimation $\delta$ de l'ensemble d des symboles des différents codes transmis, le procédé, objet de la présente invention, consiste à effectuer une opération de pseudo-inversion de la matrice de transfert A, pseudo-inversion de la forme $\delta=(A^+.A)^{-1}.A^+.e$ mentionnée précédemment dans la description.

Il est remarquable en ce qu'il consiste en outre, pour une sous-matrice de transfert $A_S$ correspondant à un nombre S de lignes de blocs de la matrice de transfert A, à déterminer un ensemble de filtres égaliseurs permettant d'estimer successivement tous les symboles émis par les différents codes CDMA, à partir d'un nombre déterminé d'échantillons reçus.

On indique que la sous-matrice colonne des blocs Bi avec i = 0 à p, soit la sous-matrice $B_0$ à $B_p$ représentée en figure 1d ou 2a, 2b, désigne la matrice de transfert de tous les symboles émis en même temps vers les Ka antennes.

Ainsi que représenté sur les figures 2a et 2b, pour S lignes de blocs de la matrice de transfert A, chaque sous-matrice de transfert $A_S$ vérifie la relation (1) :

$$e_S = A_S.d_{S+P}. \qquad (1)$$

Dans cette relation, $e_S$ désigne le sous-ensemble des échantillons reçus sur les Ka antennes comprenant S blocs d'échantillons. En partant de cette relation, on peut estimer le $(P+1)^{ième}$ bloc de $d_{s+p}$, ce qui correspond à un symbole par code CDMA simultanément actif, à condition que le nombre S vérifie la relation (2) :

$$(S+P).K < Ka.Q.S \qquad (2)$$

Dans cette relation, on rappelle que Q désigne le facteur d'étalement du code CDMA appliqué à chaque symbole transmis, P désignant la longueur du canal en nombre de périodes symboles $T_S$.

Par décalage successif d'un bloc vis-à-vis du vecteur des symboles des codes d et du vecteur des échantillons e, ainsi que représenté à la figure 2b, la même sous-matrice de transfert $A_S$ permet de passer des symboles aux échantillons, il est ainsi possible de construire à partir de cette sous-matrice un ensemble de filtres égaliseurs , un filtre par code permettant de retrouver successivement les symboles émis à partir d'un certain nombre d'échantillons reçus sur les Ka antennes équipant le récepteur.

Le processus de décalage représenté en figures 2a et 2b peut être utilisé du début à la fin du vecteur des échantillons en appliquant une fenêtre glissante d'un pas correspondant Ka.Q pour obtenir successivement tous les symboles émis par le code précité.

Ainsi, en référence aux figures 2a et 2b, la même sous-matrice $A_S$ permet de calculer successivement tous les blocs de la matrice des symboles pour réaliser l'estimation considérée.

Sur la figure 2a et la figure 2b, on indique que $d_{S+P}^T$ désigne le vecteur (ligne) transposé du vecteur (colonne) $d_{S+P}$.

Le procédé, objet de la présente invention, reste en outre valable pour les extrémités du vecteur d des symboles des différents codes. En effet, l'adjonction aux deux extrémités de blocs nuls au vecteur d précité n'entraîne pas de conséquence préjudiciable, la relation précédente liant chaque sous-matrice de transfert $A_S$, le vecteur des symboles des différents codes correspondant et le vecteur des échantillons $e_S$ restant valable.

La taille minimum de la sous-matrice à prendre en compte est donnée par la relation (2) précédemment mentionnée dans la description et permettant d'estimer un bloc du vecteur $d_{S+P}$. Cette relation indique que le vecteur $e_S$ doit être plus long que le vecteur $d_{S+P}$.

Toutefois, les performances peuvent être améliorées en utilisant tous les échantillons auxquels le bloc à estimer du vecteur d a contribué. Ce mode opératoire permet de dresser le tableau 3 ci-après qui représente en fonction de P, la plage dans laquelle il faut choisir la valeur S, la meilleure valeur étant celle qui correspond au compromis complexité/performance recherché.

TABLEAU 3

| P | 1 | 4 | 7 |
|---|---|---|---|
| $S_{MIN}$ | 1 | 2 | 4 |
| $S_{MAX}$ | 2 | 5 | 8 |

Il faut noter que le choix de $S = S_{MAX}$ implique toutefois que la sous-matrice de transfert $A_S$ présente toutefois dix fois moins de lignes et cinq fois moins de colonnes que la matrice de transfert A.

En outre, selon un aspect particulièrement remarquable du procédé, objet de la présente invention, on indique que pour une matrice de transfert A de dimension [Ka.Q.(N+P)xK.N] qui peut être considérée comme une matrice de taille [(N+P)xN] composée de blocs de taille [Ka.QxK], les filtres multidimensionnels égaliseurs sont formés par la $(P+1)^{ème}$ ligne de blocs de la matrice $A_S^{-1}$ pseudo-inverse de la sous-matrice de transfert $A_S$ et vérifiant la relation :

$$(A_S)^{-1} = (A_S^+ \cdot A_S)^{-1} \cdot A_S^+$$

Si en outre un seul code est alloué au récepteur mobile, il suffit alors de calculer la ligne (de la ligne de bloc calculée $A_S^{-1}$) correspondant au code recherché.

Ainsi, la ligne de rang k de cette ligne de blocs définit le filtre égaliseur pour le code de rang k.

Dans le cas où le calcul direct de la matrice pseudo-inverse de la sous-matrice de transfert $A_S$ s'avère trop complexe, alors, le même type de résolution que dans le cas de la détection conjointe classique peut être utilisé.

D'une manière générale, on indique que les données décodées sont le résultat du filtrage du produit $A_S^+ \cdot e_S$ par les lignes de $(A_S^+ \cdot A_S)^{-1}$ calculées. Ainsi, (S+P).K multiplications sont nécessaires pour chaque symbole de données. Dans le cas où un seul code est alloué au mobile, la complexité globale de cette étape est ramenée à (S+P).K. N multiplications, ce qui représente une quantité négligeable par rapport au processus de détection conjointe classique.

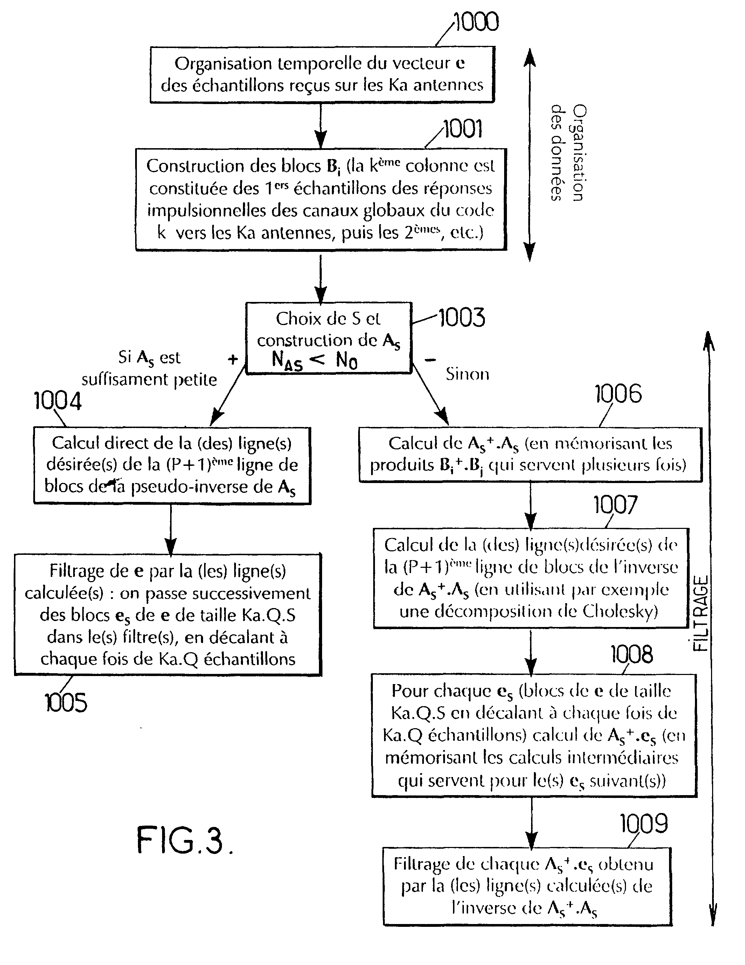

Une description plus détaillée d'un mode de mise en oeuvre préférentiel du procédé de détection conjointe, objet de la présente invention, sera maintenant donnée en liaison avec la figure 3.

D'une manière générale, on indique que le procédé, objet de la présente invention, comprend une phase d'organisation des données suivie d'une phase de calcul proprement dite, la phase de calcul permettant de définir le processus de filtrage appliqué à l'ensemble des échantillons reçus constituant le vecteur colonne des échantillons reçus e.

Ainsi que représenté sur la figure 3, la phase d'organisation des données peut comporter une étape 1000 consistant à organiser temporellement le vecteur colonne e des échantillons reçus sur les Ka antennes. Cette étape 1000 peut être suivie d'une étape 1001 consistant à construire les blocs $B_i$ constitutifs de la matrice de transfert A précédemment mentionnée dans la description. Conformément à un aspect spécifique du procédé, objet de la présente invention, l'étape 1001 peut consister à établir des blocs $B_i$ de façon que la $k^{\text{ième}}$ colonne soit formée par les premiers échantillons des réponses impulsionnelles des canaux globaux du code de rang k vers les Ka antennes, puis les deuxièmes échantillons et ainsi de suite, ainsi que mentionné précédemment dans la description.

La phase d'organisation des données précitée, constituée par les étapes 1000 et 1001, peut alors être suivie d'une phase de filtrage proprement dite.

La phase de filtrage proprement dite peut comporter, ainsi que représenté de même en figure 3, une étape 1003 consistant à choisir le nombre S de lignes de la matrice de transfert A pour en fait constituer la sous-matrice $A_S$ ainsi que mentionné précédemment dans la description. On rappelle que le choix de S peut être effectué conformément aux critères indiqués précédemment dans la description en liaison avec le tableau 3. L'étape 1003 comporte également une étape de critère de test du nombre d'éléments de la sous-matrice $A_S$ ainsi constituée à une valeur de seuil déterminée, notée $N_0$. On comprend en particulier que la valeur de seuil $N_0$ peut être définie de manière arbitraire, expérimentalement, en fonction des possibilités de calcul dont on dispose. L'étape 1003 permet ainsi, suite au choix de la taille de la sous-matrice $A_S$ précitée et si cette sous-matrice est suffisamment petite, le nombre d'éléments de cette dernière $N_{AS}$ étant inférieur à $N_0$, d'effectuer une étape 1004 consistant à calculer directement la $P+1^{\text{ème}}$ ligne de blocs de la matrice pseudo-inverse de la sous-matrice $A_S$, cette étape 1004 étant elle-même suivie d'une étape 1005 consistant à filtrer les échantillons reçus du vecteur colonne d'échantillons e par l'intermédiaire de la ligne de rang P+1 de blocs de la matrice pseudo-inverse de la sous-matrice $A_S$. On indique que le filtrage réalisé à l'étape 1005 est en fait appliqué successivement au bloc d'échantillons $e_S$ de taille Ka.Q.S par décalage successif de Ka.Q échantillons, ce décalage correspondant au mode opératoire représenté précédemment dans la description en liaison avec les figures 2a et 2b.

Dans le cas où le nombre d'éléments $N_{AS}$ de la sous-matrice $A_S$ n'est pas inférieur à la valeur de seuil $N_0$, l'étape 1003 est au contraire suivie d'une étape 1006 consistant à calculer le produit de la sous-matrice $A_S$ transconjuguée, notée $A_S{}^+$ et de la sous-matrice $A_S$ précitée. Cette étape 1006 est elle-même suivie d'une étape 1007 consistant à calculer au moins une ligne de la $P+1^{\text{ème}}$ ligne de blocs de l'inverse du produit $A_S{}^+.A_S$ calculé à l'étape 1006 précédente. On indique que le calcul de l'étape 1007 peut être réalisé par la mise en oeuvre d'une décomposition de Cholesky.

L'étape 1007 est elle-même suivie d'une étape 1008 consistant à calculer, pour tout bloc d'échantillons reçus es de taille Ka.Q.S du vecteur colonne d'échantillons e le produit $A_S{}^+.e_S$ de la sous-matrice transconjuguée $A_S{}^+$ de la sous-matrice $A_S$ et de ce bloc d'échantillons reçus. De manière semblable à l'étape 1005, on rappelle que chaque bloc $e_S$ est obtenu par décalage successif de Ka.Q échantillons ainsi qu'illustré en figures 2a et 2b précédemment dans la description.

L'étape 1008 est alors suivie d'une étape 1009 consistant à filtrer chaque produit $A_S{}^+.e_S$ obtenu à l'étape 1008 précédente par l'intermédiaire de la ou des lignes de la $P+1^{\text{ème}}$ ligne de blocs de l'inverse du produit $A_S{}^+.A_S$.

**Revendications**

1. Procédé de détection conjointe d'un ensemble de K codes CDMA simultanément actifs reçus sur les Ka antennes d'un émetteur/récepteur mobile, ces codes étant transmis par l'intermédiaire d'un canal de transmission linéaire stationnaire multitrajets avec bruit additionnel blanc Gaussien et vérifiant la relation e = A.d + n où A désigne la matrice de transfert de ce canal linéaire stationnaire multitrajet, d désigne l'ensemble des symboles des différents codes à transmettre et n le vecteur de bruit additionnel, e désignant l'ensemble des échantillons reçus, procédé dans lequel une estimation δ de l'ensemble d des symboles des différents codes est effectuée par une opération de pseudo inversion de ladite matrice de transfert de la forme $\delta = (A^+.A)^{-1}.A^+.e$ où le symbole + désigne l'opérateur de transposition et de conjugaison complexe, **caractérisé en ce que** ledit procédé consiste, pour un ensemble de sous-matrices de transfert $A_S$ (1003) correspondant à un nombre S de lignes de blocs de ladite matrice de transfert A, à déterminer un ensemble de filtres égaliseurs (1005) permettant à partir d'un nombre déterminé d'échantillons reçus es d'estimer successivement tous les symboles émis par les différents codes CDMA.

2. Procédé selon la revendication 1, **caractérisé en ce que** pour toute sous-matrice de transfert $A_S$ vérifiant la relation :

$$e_S = A_S.d_{S+P}$$

$e_S$ désignant le sous-ensemble des échantillons reçus sur les Ka antennes comprenant S blocs d'échantillons, le nombre S vérifie la relation :

$$(S+P).K < Ka.Q.S$$

relation dans laquelle Q désigne le facteur d'étalement du code CDMA, appliqué à chaque symbole transmis, P désignant la longueur du canal en nombre de périodes symboles.

3. Procédé selon l'une des revendications 1 ou 2, **caractérisé en ce que** pour une matrice de transfert A, de dimension [MxN.K]avec M = Ka.Q.(N+P), N désignant le nombre de symboles transmis par code CDMA par demi-salve d'émission, cette matrice de transfert étant formée de [(N+P)xN] blocs, chaque bloc étant de taille[Ka.QxK], les filtres multidimensionnels égaliseurs sont formés par la $(P+1)^e$ ligne de blocs de la matrice $(A_S)^{-1}$ pseudo-inverse de ladite sous-matrice de transfert $A_S$ et vérifiant la relation :

$$(A_S)^{-1} = (A_S^+ \cdot A_S)^{-1} \cdot A_S^+$$

le symbole -1 désignant l'opérateur de pseudo-inversion, la ligne de rang k de cette ligne de blocs définissant le filtre pour la code de rang k.

4. Procédé selon la revendication 3, **caractérisé en ce que** pour chaque code une fenêtre glissante d'un pas Ka.Q est appliquée sur les échantillons pour obtenir successivement tous les symboles émis par ce code.

5. Procédé selon l'une des revendications 1 à 4, **caractérisé en ce que** celui-ci comporte les étapes consistant à :

   - organiser temporellement le vecteur colonne e des échantillons reçus sur les Ka antennes ;
   - construire les blocs $B_i$, la kième colonne de la matrice constituée des $B_0$, $B_1$, ...$B_p$ placés les uns au-dessus des autres en colonne étant constituée des premiers échantillons des réponses impulsionnelles des canaux globaux du code k vers les Ka antennes, puis les deuxièmes et ainsi de suite ;
   - choisir le nombre S de lignes et construire la sous-matrice $A_S$ à partir des blocs $B_i$ correspondants obtenus à l'étape précédente ;
   - suite à un critère de choix sur la taille de la sous-matrice $A_S$, si le nombre d'éléments de la sous-matrice $A_S$ est inférieur à une valeur de seuil déterminée,
   - calculer la $(P+1)^{ème}$ ligne de blocs de la matrice pseudo inverse de la sous-matrice $A_S$ ;
   - filtrer les échantillons reçus du vecteur colonne d'échantillons e par l'intermédiaire de la ligne de rang P+1 de blocs de la matrice pseudo inverse de la sous-matrice $A_S$ ;
   - appliquer successivement le filtrage réalisé à l'étape précédente aux blocs d'échantillons $e_S$ de taille Ka.Q.S par décalage successif de Ka.Q échantillons ; sinon, le nombre d'éléments de la sous-matrice $A_S$ n'étant pas inférieur à ladite valeur de seuil déterminée,
   - à calculer le produit de la sous-matrice $A_S$ transconjuguée et de la sous-matrice $A_S$ ;
   - calculer au moins une ligne de la $(P+1)^{ème}$ ligne de blocs de l'inverse du produit calculé à l'étape précédente ;
   - calculer, pour tout bloc d'échantillons reçus es de taille Ka.Q.S du vecteur colonne d'échantillons e, le produit $A_S^+.e_S$ de la sous-matrice transconjuguée $A_S^+$ de la sous-matrice $A_S$ et de ce bloc d'échantillons reçus, chaque bloc $e_S$ étant obtenu par décalage successif de Ka.Q échantillons ;
   - à filtrer chaque produit $A_S^+.e_S$ obtenu à l'étape précédente par l'intermédiaire de ladite au moins une ligne de la $(P+1)^{ème}$ ligne de blocs de l'inverse du produit $A_S^+.A_S$.

**Claims**

1. Method of conjoint detection of a set of K simultaneously active CDMA codes received at Ka antennas of a mobile transceiver, said codes being transmitted via a multipath stationary linear transmission channel with Gaussian additional white noise and satisfying the equation e = A.d + n where A is the transfer matrix of said multipath stationary linear channel, d is the set of symbols of the codes to be transmitted, n is the additional noise vector and e is the set of received samples, in which method an estimate $\delta$ of the set d of symbols of the codes is obtained by pseudo-inversion of said transfer matrix of the form $\delta = (A^+.A)^{-1}.A^+.e$ where the symbol + denotes the transposition and complex conjugation operator, **characterised in that**, for a set of transfer sub-matrices $A_S$ (1003) corresponding to a number S of rows of blocks of said transfer matrix A, said method determines a set of equalising filters (1005) for successively estimating all the symbols transmitted by the CDMA codes from a particular number of received samples $e_S$.

2. Method according to claim 1 **characterised in that**, for any transverse sub-matrix $A_S$ satisfying the equation:

$$e_S = A_S.d_{S+P}$$

where $e_S$ is the sub-set of samples received at the Ka antennas comprising S blocks of samples, the number S satisfies the equation:

$$(S+P).K < Ka.Q.S$$

in which equation Q is the spreading factor of the CDMA code applied to each transmitted symbol and P is the length of the channel expressed as a number of symbol periods.

3. Method according to either claim 1 or claim 2 **characterised in that**, for a transfer matrix A with dimensions [MxN. K], where M = Ka.Q.(N+P) and N is the number of symbols transmitted for each CDMA code in each transmitted half-burst, formed of [(N+P)xN] blocks each of size [Ka.QxK], the equalising multi-dimensional filters are formed by the $(P+1)^{th}$ row of blocks of the pseudo-inverse matrix $(A_S)^{-1}$ of said transfer sub-matrix $A_S$ satisfying the equation:

$$(A_S)^{-1} = (A_S^+.A_S)^{-1}.A_S^+$$

in which the symbol -1 denotes the pseudo-inversion operator, and the $k^{th}$ row of this row of blocks defines the filter for the $k^{th}$ code.

4. Method according to claim 3 **characterised in that** a sliding window with an increment Ka.Q is applied to the samples of each code to obtain successively all the symbols transmitted by that code.

5. Method according to any of claims 1 to 4 **characterised in that** it includes the following steps:

   - temporally organising the column vector e of the samples received at the Ka antennas,
   - constructing the blocks $B_i$, the $k^{th}$ column of the matrix consisting of $B_0$, $B_1$, ..., $B_p$ stacked one on top of the other in a column being made up of the first samples of the impulse responses of the global channels of the code k to the Ka antennas, then the second samples, and so on,
   - choosing the number S of rows and constructing the sub-matrix $A_S$ from corresponding blocks $B_i$ obtained in the preceding step,

   if the number of elements of the sub-matrix As is less than a particular threshold value, following application of a criterion of choice to the size of the sub-matrix $A_S$:

   - calculating the $(P+1)^{th}$ row of blocks of the pseudo-inverse of the sub-matrix $A_S$,
   - filtering the received samples of the sample column vector e using the $(P+1)^{th}$ row of blocks of the pseudo-inverse matrix of the sub-matrix $A_S$,
   - applying the filtering of the preceding step successively to the blocks of samples $e_S$ of size Ka.Q.S by successively shifting Ka.Q samples,

   otherwise, if the number of elements of the sub-matrix $A_S$ is not less than said particular threshold value:

   - calculating the product of the transconjugate matrix $A_S$ and the sub-matrix $A_S$,
   - calculating at least one row of the $(P+1)^{th}$ row of blocks of the inverse of the product calculated in the preceding step,
   - calculating, for every block of samples received $e_S$ of the sample column vector e of size Ka.Q.S, the product $A_S^+.e_S$ of the transconjugate sub-matrix $A_S^+$ of the sub-matrix $A_S$ and of the block of received samples, each block $e_S$ being obtained by successively shifting Ka.Q samples, and
   - filtering each product $A_S^+.e_S$ obtained in the preceding step using said at least one row of the $(P+1)^{th}$ row of blocks of the inverse of the product $A_S^+.A_S$.

**Patentansprüche**

1. Verfahren zur gleichzeitigen Erfassung eines Satzes von K gleichzeitig aktiven, auf den Ka Antennen eines mobilen Sender/Empfängers empfangenen CDMA-Codes, wobei diese Codes über einen linearen stationären Mehrwegübertragungskanal mit zusätzlichem weißem Gauss'schem Rauschen unter Einhaltung der Beziehung e = A.d + n übertragen werden, wobei A die Übertragungsmatrix dieses linearen stationären Mehrwegkanals, d den Satz der Symbole der verschiedenen zu übertragenden Codes, n den zusätzlichen Rauschvektor und e die Gesamtheit der empfangenen Abtastwerte bezeichnet, bei welchem Verfahren eine Abschätzung $\delta$ des Satzes d der Symbole der verschiedenen Codes durch eine Pseudo-Umkehrungsoperation der Übertragungsmatrix der Form $\delta = (A^+. A)^{-1}.A^+.e$ durchgeführt wird, wobei das Symbol + den Transpositions- und Komplex-Konjugationsoperator bezeichnet, **dadurch gekennzeichnet, dass** das Verfahren darin beruht, für einen Satz von Übertragungs-Untermatrizen $A_S$ (1003), die einer Zahl S von Zeilen von Blöcken der Übertragungsmatrix A entsprechen, einen Satz von Ausgleichsfiltern (1005) zu bestimmen, der es erlaubt, ausgehend von einer festgelegten Zahl von empfangenen Abtastwerten $e_S$ nacheinander alle von den verschiedenen CDMA-Codes gesendeten Symbole abzuschätzen.

2. Verfahren nach Anspruch 1, **dadurch gekennzeichnet, dass** für jede Unter-Übertragungsmatrix $A_S$, die die Beziehung:

$$e_S = A_S.d_{S+P}$$

erfüllt, wobei $e_S$ die Untermenge von auf den Ka empfangenen Abtastwerten mit S Abtastwertblöcken bezeichnet, die Zahl S die Beziehung:

$$(S+P).K < Ka.Q.S$$

erfüllt, in welcher Q den Spreizfaktor des CDMA-Codes, angewendet auf jedes übertragene Symbol, und P die Länge des Kanals als Anzahl von Symbolperioden bezeichnet.

3. Verfahren nach einem der Ansprüche 1 oder 2, **dadurch gekennzeichnet, dass** für eine Übertragungsmatrix A mit Dimension [MxN.K] mit M = Ka.Q.(N+P), wobei N die Zahl von pro CDMA-Code pro Halb-Sendeburst übertragenen Symbolen bezeichnet, die Übertragungsmatrix aus [(N+P)xN] Blöcken gebildet ist, wobei jeder Block der Größe [Ka.QxK] ist, die mehrdimensionalen Ausgleichsfilter durch die (P+1)-te Zeile von Blöcken der zu der Unter-Übertragungsmatrix $A_S$ pseudo-inversen Matrix $(A_S)^{-1}$ gebildet sind, die die Beziehung

$$(A_S)^{-1} = (A_S^+.A_S)^{-1}.A_S^+$$

erfüllt, wobei das Symbol -1 den Pseudo-Inversionsoperator bezeichnet, und die Zeile vom Rang k dieser Zeile von Blöcken das Filter für den Code vom Rang k definiert.

4. Verfahren nach Anspruch 3, **dadurch gekennzeichnet, dass** für jeden Code ein mit einer Schrittweite Ka.Q gleitendes Fenster auf die Abtastwerte angewandt wird, um nacheinander alle von diesem Code gesendeten Symbole zu erhalten.

5. Verfahren nach einem der Ansprüche 1 bis 4, **dadurch gekennzeichnet, dass** es die Schritte umfasst, die darin beruhen,

   - den Spaltenvektor e der auf den Ka Antennen empfangenen Abtastwerte zeitlich zu organisieren;

   - die Blöcke $B_i$ zu konstruieren, wobei die k-te Spalte der Matrix, die durch die zu einer Spalte übereinander gestellten $B_0$, $B_1$, ..., $B_p$ gebildet ist, aus den ersten Abtastwerten der Impulsantworten der globalen Kanäle des Codes k zu den Ka Antennen, dann den zweiten, usw. gebildet ist;

   - die Zahl S von Zeilen zu wählen und die Untermatrix $A_S$ aus den entsprechenden im vorhergehenden Schritt erhaltenen Blöcken Bi zu konstruieren;

- anhand eines Auswahlkriteriums betreffend die Größe der Untermatrix $A_S$, wenn die Zahl von Elementen der Untermatrix kleiner als ein gegebener Schwellwert ist,

- die (P+1)-te Zeile von Blöcken der zu der Untermatrix $A_S$ pseudo-inversen Matrix zu berechnen;

- die empfangenen Abtastwerte des Abtastwertspaltenvektors e mit der Zeile vom Rang P+1 von Blöcken der zur Untermatrix $A_S$ pseudo-inversen Matrix zu filtern;

- die im vorhergehenden Schritt realisierte Filterung nacheinander auf die Blöcke von Abtastwerten $e_S$ der Größe Ka.Q.S durch sukzessives Verschieben um Ka.Q Abtastwerte anzuwenden;
  andernfalls, wenn die Zahl von Elementen der Untermatrix $A_S$ nicht kleiner als der vorgegebene Schwellwert ist,

- das Produkt der transkonjugierten Untermatrix $A_S$ und der Untermatrix $A_S$ zu berechnen;

- wenigstens eine Zeile der (P+1)-ten Zeile von Blöcken der Inversen des im vorhergehenden Schritt berechneten Produkts zu berechnen;

- für jeden Block von empfangenen Abtastwerten $e_S$ der Größe Ka.Q.S des Abtastwert-Spaltenvektors e das Produkt $A_S^+.e_S$ der transkonjugierten Untermatrix $A_S^+$ der Untermatrix $A_S$ und dieses Blocks von empfangenen Abtastwerten zu berechnen, wobei jeder Block $e_S$ durch sukzessives Verschieben um Ka.Q Abtastwerte erhalten wird;

- jedes im vorhergehenden Schritt erhaltene Produkt $A_S^+.e_S$ mit der wenigstens einen Zeile der (P+1)-ten Zeile von Blöcken der Inversen des Produkts $A_S^+.e_S$ zu filtern.

10 CODES

1 TRAME =16 INTERVALLES = 10 m s

FIG.1a (ART ANTÉRIEUR)

| BURST 1 | DONNÉES 1 | APPRENTISSAGE | DONNÉES 2 | G |
|---|---|---|---|---|
| | 448 CHIPS | 296 CHIPS | 448 CHIPS | 58 |

| BURST 2 | DONNÉES 1 | APPRENTISSAGE | DONNÉES 2 | G |
|---|---|---|---|---|
| | 554 CHIPS | 107 CHIPS | 554 CHIPS | 55 |

FIG.1b. (ART ANTÉRIEUR)

SYMBOLE 1

SYMBOLE 2

SYMBOLE 3

SYMBOLE 4

ÉCHANTILLON

N°  Q  2 Q  3 Q  4 Q  5 Q  6 Q  7 Q

SOMME DES CONTRIBUTIONS DES 4 SYMBOLES  0...0

# FIG.1c. (ART ANTÉRIEUR)

A

# FIG.1d. (ART ANTÉRIEUR)

FIG.2a.

FIG.2b.

1000

Organisation temporelle du vecteur e des échantillons reçus sur les Ka antennes

1001

Construction des blocs $B_i$ (la $k^{ème}$ colonne est constituée des $1^{ers}$ échantillons des réponses impulsionnelles des canaux globaux du code k vers les Ka antennes, puis les $2^{èmes}$, etc.)

Organisation des données

1003

Choix de S et construction de $A_S$
$N_{AS} < N_0$

Si $A_S$ est suffisament petite + - Sinon

1004

Calcul direct de la (des) ligne(s) désirée(s) de la $(P+1)^{ème}$ ligne de blocs de la pseudo-inverse de $A_S$

1006

Calcul de $A_S^+.A_S$ (en mémorisant les produits $B_i^+.B_i$ qui servent plusieurs fois)

1007

Calcul de la (des) ligne(s)désirée(s) de la $(P+1)^{ème}$ ligne de blocs de l'inverse de $A_S^+.A_S$ (en utilisant par exemple une décomposition de Cholesky)

Filtrage de e par la (les) ligne(s) calculée(s) : on passe successivement des blocs $e_s$ de e de taille Ka.Q.S dans le(s) filtre(s), en décalant à chaque fois de Ka.Q échantillons

1005

1008

Pour chaque $e_s$ (blocs de e de taille Ka.Q.S en décalant à chaque fois de Ka.Q échantillons) calcul de $A_S^+.e_s$ (en mémorisant les calculs intermédiaires qui servent pour le(s) $e_s$ suivant(s))

FILTRAGE

FIG.3.

1009

Filtrage de chaque $A_S^+.e_s$ obtenu par la (les) ligne(s) calculée(s) de l'inverse de $A_S^+.A_S$